**Europäisches Patentamt**

**European Patent Office**

**Office européen des brevets**

(19)

(11) Veröffentlichungsnummer: **0 229 119**
**B1**

(12) **EUROPÄISCHE PATENTSCHRIFT**

(45) Veröffentlichungstag der Patentschrift:
**12.04.89**

(51) Int. Cl.⁴: **B 01 J 8/24, C 10 B 53/00**

(21) Anmeldenummer: **86904076.6**

(22) Anmeldetag: **26.06.86**

(86) Internationale Anmeldenummer:
**PCT/DE 86/00263**

(87) Internationale Veröffentlichungsnummer:
**WO 87/00082 (15.01.87 Gazette 87/1)**

(54) **WIRBELSCHICHTREAKTOR.**

(30) Priorität: **02.07.85 DE 3523653**

(43) Veröffentlichungstag der Anmeldung:
**22.07.87 Patentblatt 87/30**

(45) Bekanntmachung des Hinweises auf die Patenterteilung:
**12.04.89 Patentblatt 89/15**

(84) Benannte Vertragsstaaten:
**BE CH FR GB IT LI NL SE**

(56) Entgegenhaltungen:
**FR-A- 1 262 611**
**FR-A- 2 375 030**
**GB-A- 1 048 937**
**GB-A- 2 150 040**

(73) Patentinhaber: **Asea Brown Boveri Aktiengesellschaft, Kallstadter Strasse 1, D-6800 Mannheim-Käfertal (DE)**

(72) Erfinder: **TIMMANN, Hinrich, Oktaviostrasse 16a, D-2000 Hamburg 70 (DE)**

(74) Vertreter: **Rupprecht, Klaus, Dipl.-Ing. et al, c/o Asea Brown Boveri Aktiengesellschaft Zentralbereich Patente Postfach 100351, D-6800 Mannheim 1 (DE)**

ACTORUM AG

# Beschreibung

Die Erfindung betrifft einen Wirbelschichtreaktor nach dem Oberbegriff des Anspruchs 1.

Bei vielen Anwendungen von Wirbelschichtreaktoren, insbesondere beim pyrolytischen Aufarbeiten von hoch kohlenwasserstoffhaltigen Abfällen wie Altgummi oder Kunststoffabfällen hat sich in dem deutschen Patent 26 58 371 beschriebene Technik mit nach unten gerichteter Einblasrichtung des Wirbelgases besonders gut bewährt. Zum Einblasen wurden Wirbelgas-Zuleitungsrohre verwendet, die sich in den für die Bildung der Wirbelschicht vorgesehenen Teil des Reaktor-Innenraumes hineinerstrecken, vorzugsweise so, dass die Zuleitungsrohre in nach unten abgebogenen Endabschnitten enden. Diese zum Einleiten des Wirbelgases von oben her dienenden Einrichtungen unterteilten im Betrieb das Wirbelbett in einzelne freie Teilquerschnitte, von denen jeder einzelne nur einen kleinen Bruchteil des gesamten freien Querschnitts des Wirbelbett-Bereichs einnahm. Dies erschwerte die Verarbeitung von Ausgangsmaterial, das grössere nicht pyrolysierbare Bestandteile enthielt, beispielsweise Drahteinlagen von Autoreifen. Ferner erschwerten die in dem Wirbelbett befindlichen Zuleitungsrohre die Erzeugung einer für viele Anwendungszwecke vorteilhaften Drehbewegung des Wirbelbetts und überhaupt die Ausbildung von über den ganzen Querschnitt des Reaktor-Innenraumes gleichmässigen Strömungsverhältnissen im Wirbelbett.

Die Erfindung geht von der Aufgabe aus, einen Wirbelschnittreaktor zu schaffen, der mit der beschriebenen vorteilhaften Einführung des Wirbelgases von oben her betrieben wird, die Verarbeitung grösserer nicht pyrolysierbarer Restanteile des Ausgangsmaterials erleichtert und die Ausbildung gleichmässiger Strömungsverhältnisse im Wirbelbett begünstigt.

Nach der Erfindung wird diese Aufgabe gelöst mit dem Wirbelschichtreaktor nach dem Anspruch 1.

Bei dem erfindungsgemässen Wirbelschichtreaktor bilden die nahe an der Innenseite der Umfangswand liegenden Blasmündungen keine störende Einschränkung des für die Bildung des Wirbelbetts zur Verfügung stehenden Innenraum-Querschnitts, so dass auch grössere nicht pyrolysierbare Stücke den Raum zwischen den Blasmündungen passieren können; dadurch können derartige Stücke mit grösserer Sicherheit aus dem Wirbelbett entfernt werden, und es ergibt sich die Möglichkeit, den Reaktor im Durchlauf von oben nach unten zu betreiben und dadurch bei gegebener Baugrösse einen höheren Durchsatz zu erzielen. Auch sind Beschädigungen der Blasmündungen weniger leicht möglich, und das Wirbelbett kann sich gleichmässig über den ganzen freien Querschnitt des Reaktor-Innenraumes ausbilden; auch dadurch ist eine Erhöhung des Durchsatzes möglich.

Bei der praktischen Erprobung der Erfindung hat sich gezeigt, dass mit den erfindungsgemäss nahe an der Innenseite der Umfangswand angeordneten Blasmündungen, die schräg nach unten und innen gerichtete Blasrichtungen bestimmen, ein leistungsfähiges Wirbelbett ebenso erzeugt werden kann wie mit über den ganzen Querschnitt des Wirbelbett-Bereichs verteilten Blasmündungen. Diese überraschende und vorteilhafte Wirkung kann noch weiter verbessert und gegen Störungen stabiler gestaltet werden, wenn in Ausgestaltung der Erfindung Blasmündungen in einem schräg nach unten und innnen verlaufenden Abschnitt der Innenseite der Reaktor-Innenwand angeordnet sind. Vorzugsweise ist dabei der schräge Abschnitt ein im wesentlichen konischer unterer Abschnitt der Innenwand, so dass sich die gewünschte Rotationssymmetrie bezüglich einer vertikalen Reaktorachse ergibt. Bei dieser Ausgestaltung ergibt sich auch im Bereich der Reaktorachse eine für die Aufrechterhaltung des Wirbelbettes ausreichend starke Strömung des Wirbelgases nach oben.

Der erfindungsgemässe Wirbelschichtreaktor ist für eine zumindest teilweise indirekte Beheizung besonders geeignet, weil in dem von Blasmündungen im wesentlichen freien Wirbelschicht-Querschnitt Heizeinrichtungen, insbesondere Heizrohre, vorgesehen werden können, ohne dass dies die Ausbildung der Wirbelschicht übermässig stört. Es hat sich gezeigt, dass sich besonders günstige Strömungsverhältnisse und eine stabile Wirbelschicht dann ergeben, wenn die Heizrohre im wesentlichen vertikal von oben her in den Innenraum eintauchen. Für den Durchgang verhältnismässig grosser Stücke des Ausgangsmaterials oder nicht pyrolysierbarer Restbestandteile des Ausgangsmaterials kann dennoch ein genügend grosser zentraler Querschnitt freigelassen werden, wenn die Heizrohre in einem Umfangsbereich des Innenraumes und/oder in einem erweiterten Abschnitt des Innenraumes angeordnet sind. Der Reaktor ist dann insbesondere zum Pyrolysieren von grossstückigem Ausgangsmaterial, insbesondere Altreifen, besonders geeignet; damit die Heizrohre die Einbringung des Ausgangsmaterials nicht stören, ist zweckmässigerweise dabei der Reaktor zum Eintragen des Ausgangsmaterials in einen oberen zentralen Bereich des Reaktors ausgebildet, und die Heizrohre sind um diesen zentralen Bereich herum angeordnet.

Die Erfindung wird im folgenden anhand von Ausführungsbeispielen in Verbindung mit den Zeichnungen näher beschrieben.

Fig. 1 ist eine nicht massstäbliche schematische Darstellung nach Art eines vertikalen Axialschnitts eines erfindungsgemässen Reaktors zum Pyrolysieren von grossstückigem Ausgangsmaterial wie zum Beispiel Autoreifen, wobei eine zum Pyrolysieren kleinstückiger Kunststoffabfälle besonders geeignete andere Ausführungsform in gestrichelten Linien angedeutet ist.

Fig. 2 bis 4 sind nicht massstäbliche schematische Vertikalschnitt-Darstellungen verschiedener Ausführungsformen von Wirbelgas-Blasmündungen.

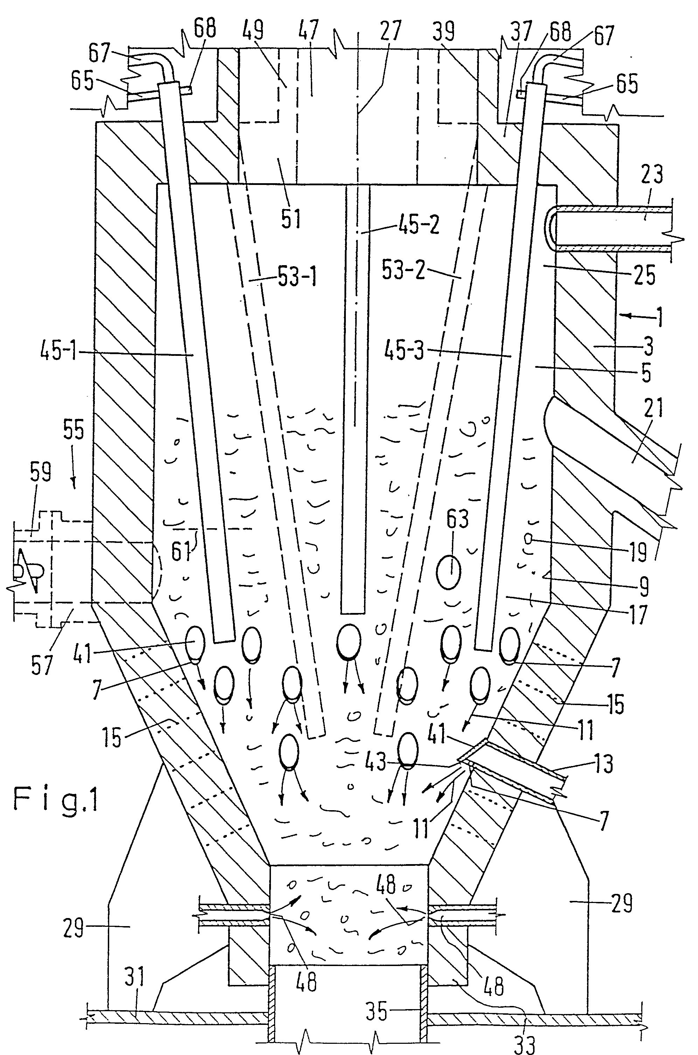

Fig. 1 zeigt einen Wirbelschichtreaktor mit indirekter Heizung, der zum pyrolytischen Aufarbeiten von Altreifen geeignet ist. Der Reaktor hat einen Reaktorbehälter 1 mit einer im wesentlichen aufrechtstehenden Umfangswand 3, die einen Innenraum 5 von vorzugsweise kreisförmigem Querschnitt umgibt. Der Reaktor hat eine Anordnung von Wirbelgas-Blasmündungen zum Einblasen eines Wirbelgases, das vorzugsweise mindestens teilweise aus bei der Pyrolyse gewonnenem Pyrolysegas besteht, in ein Wirbelschichtmaterial, vorzugsweise Sand und/oder Aluminiumoxid, wobei die Blasmündungen eine nach unten weisende Blasrichtung bestimmen und vorzugsweise an inneren Enden von Wirbelgas-Zuleitungsrohren vorgesehen sind. Bei dem erfindungsgemässen Reaktor sind mehrere horizontale Reihen von Blasmündungen 7 nahe an der Innenseite 9 der Umfangswand 3 angeordnet. Die Blasmündungen bestimmen schräg nach unten und innen gerichtete Blasrichtungen, die durch Pfeile 11 angedeutet sind. Bei der dargestellten Ausführungsform sind die Blasmündungen an inneren Enden von Wirbelgas-Zuleitungsrohren vorgesehen. In Fig. 1 ist der Einfachheit halber nur ein einziges Wirbelgas-Zuleitungsrohr 13 mit seiner Blasmündung 7 genauer im Schnitt dargestellt; die Höhenlagen der übrigen Blasmündungen sind durch punktierte Linien 15 angedeutet. Ferner ist in Fig. 1 noch das im Betrieb sich bildende Wirbelbett 17 mit darin befindlichen Teilen 19 eines Wirbelschichtmaterials angedeutet. Im obersten Bereich der sich im Betrieb ausbildenden Wirbelschicht 17 mündet in den Innenraum ein Überlauf 21 zum Abziehen von Sand und Russ aus der Wirbelschicht. Im obersten Bereich 25 des Innenraumes 5 mündet eine Pyrolysegasableitung 23. Der Innenraum 5 kann in seinem oberen Bereich auch erweitert sein; dies ist in der Fig. 1 nicht dargestellt.

Der Reaktor ruht in der dargestellten betriebsmässigen Lage mit im wesentlichen vertikaler Reaktorachse 27 über Stützen 29 auf einem Boden 31. Der Reaktor verjüngt sich nach unten und endet in einem Feststoff-Austragsstutzen 33, an den bei der dargestellten Ausführungsform ein Feststoff-Austragsrohr 35 anschliesst. An seinem oberen Ende hat der Reaktor eine Stirnwand 37, in welcher zentral ein Eintragsstutzen 39 zum Einführen von Wirbelbettmaterial und zu pyrolysierendem Ausgangsmaterial vorgesehen ist. Durch diesen Eintragsstutzen können auch irgendwelche Zuschlagstoffe, beispielsweise Kalk, eingeführt werden, um die in der Wirbelschicht ablaufende Reaktion chemisch zu beeinflussen.

Bei dem dargestellten Reaktor liegen die Blasmündungen 7 im wesentlichen bündig in der Innenseite 9 der Umfangswand 3, so dass die Blasmündungen die Ausbildung eines gleichmässigen Strömungsbildes möglichst wenig behindern. Die Blasmündungen sind nach oben abgedeckt, um eine nach unten gerichtete Blasrichtung sicherzustellen und das Eindringen von Wirbelschichtmaterial in die Wirbelgas-Zuleitungen zu verhindern. Bei der dargestellten Ausführungsform sind die Blasmündungen jeweils durch wenigstens eine schräg nach unten und innen verlaufende Abdeckung 41 abgedeckt. Dadurch wird der Durchgang von Material durch den Reaktor möglichst wenig behindert.

Die Blasmündungen 7 sind an inneren Enden von durch die Umfangswand 3 verlaufenden Wirbelgas-Zuleitungen vorgesehen. Fig. 1 zeigt eine Ausführungsform, bei der die Wirbelgas-Zuleitungen von den schon erwähnten Wirbelgas-Zuleitungsrohren 13 gebildet sind. Die Verwendung gesonderter Zuleitungsrohre, die sich durch entsprechende Bohrungen in der Umfangswand 3 erstrecken, ermöglicht eine bequeme Veränderung von Lage und Geometrie der Blasmündungen sowie ein einfaches Auswechseln der Blasmündungen bei Verschleiss oder Beschädigung.

Bei der dargestellten Ausführungsform sind Wirbelgas-Zuleitungsrohre 13 vorgesehen, die an ihren inneren Enden wenigstens mit einem unteren Umfangsabschnitt 43 über die Innenseite 9 der Umfangswand 3 vorstehen, in diesem Umfangsabschnitt eine Blasmündung 7 aufweisen und im übrigen verschlossene Enden aufweisen, die Abdeckungen 41 für die Blasmündungen 7 bilden. Diese Ausführungsform ist baulich sehr einfach und wenig aufwendig. Bei der dargestellten Ausführungsform verlaufen die Wirbelgas-Zuleitungen, verkörpert durch die Wirbelgas-Zuleitungsrohre, zumindest in den dargestellten inneren Endabschnitten, die sich durch die Umfangswand 3 erstrecken, schräg nach oben und innen in den Reaktor hinein. Dadurch kann die gewünschte Blasrichtung nach innen und unten bequem durch eine Öffnung in einem vorstehenden unteren Umfangsbereich des Wirbelgas-Zuleitungsrohres 13 erzielt werden. Bei der dargestellten Ausführungsform sind die Blasmündungen einfach als in Umfangsrichtung erstreckte Schlitze ausgebildet. Derartige Schlitze können sehr einfach und auch in Massenfertigung mit geringen Kosten hergestellt werden.

Es sind natürlich auch baulich aufwendigere Ausführungsformen der Blasmündungen möglich und ggf. zweckmässig, um ein genauer gewünschtes Strömungsbild und/oder eine gewünschte Austrittsgeschwindigkeit des Wirbelgases zu erzielen. Zu diesem Zweck können insbesondere in den Blasmündungen nach unten gerichtete Blasrohre vorgesehen sein, und diese Blasrohre können insbesondere einen die Austrittsgeschwindigkeit des Wirbelgases erhöhenden Querschnittsverlauf haben. Derartige Ausführungen sind in Fig. 1 nicht dargestellt. Eine hohe Austrittsgeschwindigkeit des Wirbelgases kann zweckmässig sein, um die Höhe der Wirbelschicht zu vergrössern. Dies kann aus mehreren Gründen vorteilhaft sein, so zum Beispiel zur Erzielung einer Sichterwirkung, um bei der Pyrolyse entstehende leichte Teilchen abzusondern und abzuführen, beispielsweise über den dargestellten Überlauf 21, oder um im Fall des Pyrolysierens von Kunststoffabfällen, die seitlich in den Reaktor eingeführt werden, durch Verändern der Einführhöhe bezüglich der Gesamthöhe der Wirbelschicht die chemische Pyrolysereaktion zu verändern.

Bei dem dargestellten Reaktor sind, wie schon eingangs erwähnt wurde, Heizrohre 45 zum indirekten Beheizen der Wirbelschicht 17 vorgesehen, die im wesentlichen vertikal von oben her in den Innenraum 5 eintauchen und in der oberen Stirnwand 37 des Reaktorbehälters 1 befestigt sind. Derartige im wesentlichen vertikal verlaufende Heizrohre behindern die Wirbelschicht 17 weniger als quer durch den Reaktor verlaufende Rohre. Da der dargestellte Reaktor zum Pyrolysieren grossstückiger Austragsmaterialien vorgesehen ist und deshalb einen möglichst grossen freien Querschnitt haben soll, sind bei der dargestellten Ausführungsform die Heizrohre nur in einem Umfangsbereich des Innenraumes 5 vorgesehen. Eine noch geringere Einschränkung des freien Querschnitts durch die Heizrohre ergibt sich, wenn die Heizrohre in einem erweiterten Abschnitt des Innenraumes angeordnet sind. Dies ist bei der dargestellten Ausführungsform dadurch erreicht, dass sich der Innenraum 5 des Reaktorbehälters 1 in einem unteren Abschnitt konisch nach oben erweitert und sich nach oben in einem zylindrischen Abschnitt fortsetzt. Wenn die Heizrohre wie beschrieben in einem Umfangsbereich des Innenraumes angeordnet sind, ist es zweckmässig, wenn sie in zwischen Blasmündungen liegende Umfangsbereiche eintauchen, um die Blasgeometrie möglichst wenig zu stören. Dies ist zum Beispiel bei den Blasrohren 45-1 und 45-3 der Fall. Falls verhältnismässig viele Heizrohre vorgesehen werden müssen, beispielsweise um eine gewünschte hohe Heizleistung zu erzielen, ist es zweckmässig, wenn diejenigen Heizrohre, die in von Blasmündungen besetzten Umfangsbereichen liegen, oberhalb der betreffenden Blasmündungen enden. Dies ist in Fig. 1 bei dem in der Mitte dargestellten Heizrohr 45-2 der Fall.

Wie schon beschrieben wurde, ist der dargestellte Reaktor zum Pyrolysieren von grossstückigem Ausgangsmaterial, insbesondere Altreifen, ausgebildet. Die Eingabe des Ausgangsmaterials erfolgt von oben her in einen oberen zentralen Bereich 47 des Reaktors, der von dem schon genannten Eintragsstutzen 39 gebildet wird. Die Heizrohre 45 sind um diesen zentralen Bereich 47 herum angeordnet und erstrecken sich im wesentlichen vertikal. An den verhältnismässig grossen freien Querschnitt des Innenraumes 5 schliesst sich nach unten der ebenfalls mit verhältnismässig grossem Querschnitt bemessene Feststoff-Austragsstutzen 33 an, über den verhältnismässig grossstückige nicht pyrolysierbare Restbestandteile des Ausgangsmaterials nach unten ausgetragen werden können. Um eine symmetrische Ausgangsströmung durch den Feststoff-Austragsstutzen 33 sicherzustellen, ist der Austragsstutzen 33 zentral angeordnet. Damit die auszutragenden Feststoffe nicht hängenbleiben und rasch ausgetragen werden, sind in dem unteren Austragstutzen 33 weitere Blasmündungen 48 vorgesehen, die ein im wesentlichen radialsymmetrisches Strömungsbild erzeugen und radial gerichtet sein können. Es kann dadurch die Zone des fluidisierten Zustandes nach unten bis in den Austragsstutzen 33 hinein verlängert werden.

Die beschriebene grundsätzliche Arbeitsweise ist mit im wesentlichen den gleichen baulichen Merkmalen auch bei verhältnismässig kleinstückigem Ausgangsmaterial möglich, das zum Passieren des Reaktors nur einen entsprechend geringeren freien Querschnitt benötigt. Eine solche Ausführungsform ist in Fig. 1 in gestrichelten Linien angedeutet. Es wird ein entsprechend kleinerer zentraler Eintragsstutzen 49 verwendet, und in dem so geschaffenen grösseren inneren Abschnitt 51 der Stirnwand 37 können weitere, weiter innen liegende zusätzliche Heizrohre 53 angeordnet werden, die auch, wie dargestellt, weiter in den Innenraum 5 hineinragen können.

Bei bestimmten Arten von Ausgangsmaterial kann es erwünscht sein, das Ausgangsmaterial nicht von oben her, sondern seitlich in eine mittlere Zone des Wirbelbetts 17 einzuspeisen. Dies ist insbesondere der Fall bei kleinstückigem Kunststoff-Ausgangsmaterial, das einen sehr hohen Gehalt, beispielsweise 90%, an Polymeren enthält und deshalb eine hohe spezifische Pyrolyseenergie benötigt. Würde man ein derartiges Ausgangsmaterial von oben her in das Wirbelbett einführen, so würden die sich bildenden Crackprodukte, beispielsweise niedermolekulare Olefine oder dergleichen, grössenteils direkt abgezogen und nicht mehr für die erwünschte Bildung aromatischer Verbindungen zur Verfügung stehen. Beim Einspeisen derartiger Ausgangsmaterialien in einen tieferen Bereich des Wirbelbetts stehen die primären Crackungsprodukte genügend lange unter Energiezufuhr, um weiter unter Bildung von aromatischen Verbindungen reagieren zu können. Bei Wegfall des oberen zentralen Eintragsstutzens 49 ergibt sich ausserdem die erwünschte Möglichkeit, noch mehr Heizrohre vorzusehen und dadurch die erforderliche hohe Energiezufuhr zu bewerkstelligen. An dieser Stelle sei bemerkt, dass für die Pyrolyse von Ausgangsmaterialien, die einen geringeren Gehalt an Polymeren haben, beispielsweise Gummi und Altreifen, bei denen der Polymeren-Gehalt nur etwa 50% beträgt, eine entsprechend geringere Energiezufuhr ausreicht; diese kann allein durch Heizrohre bewirkt werden, die um einen grossen zentralen Eintragsstutzen 39 herum befestigt sind und nur in einen Umfangsbereich des Innenraumes 5 eintauchen.

In Fig. 1 ist bei der in gestrichelten Linien angedeuteten Ausführungsform zum Pyrolysieren von kleinstückigem Kunststoff-Ausgangsmaterial eine seitliche Eintrageinrichtung 55 zum seitlichen Eintrag des Ausgangsmaterials in das Wirbelbett 17 vorgesehen. Es können auch mehrere seitliche Eintrageinrichtungen vorgesehen sein. Bei der in gestrichelten Linien angedeuteten Ausführungsform hat die seitliche Eintrageinrichtung 55 einen Stutzen 57, der an einen Schneckenförderer 59 angeschlossen ist. Falls sich im Bereich dieser seitlichen Eintrageinrichtung 55 Heizrohre befinden, beispielsweise bei der dargestellten Ausführungsform das Heizrohr 45-1, so ist es zweckmässig, diese Heizrohre oberhalb der Eintrageinrichtung enden zu lassen; das ist in Fig. 1 durch die gestrichelte Linie 61 angedeutet. Die seitliche Eintrageinrichtung 55 mündet in einen Abschnitt des Innenraumes 5, in welchem sich im Betrieb das Wirbelbett 17 bildet und die Pyrolyse stattfindet. Das seitlich eingeführte Ausgangsmaterial schmilzt deshalb sofort und bildet an der Einführstelle einen Schmelztropfen oder Schmelzkegel, der rasch von der in diesem Bereich sehr heissen Wirbelschicht abgetragen wird. Das abgetragene geschmolzene Material ist sehr dünnflüssig und bedeckt das Wirbelschichtmaterial, beispielsweise Sand, in grosser Oberfläche, so dass die Pyrolyse sehr rasch, beispielsweise in Sekunden oder Bruchteilen von Sekunden, abläuft. Dieser Vorgang ist deutlich verschieden von den Vorgängen beim Pyrolysieren von Altgummi, insbesondere Altreifen. Dieses Material benötigt unabhängig von seinem Eintragungsort eine verhältnismässig lange Einwirkung der Wirbelschicht, um abgetragen und pyrolysiert zu werden; dabei schreitet die Reaktion unter Aufschäumen der Oberfläche verhältnismässig langsam in tiefere Schichten fort, wobei der Zusammenhalt des Materials verhältnismässig lange erhalten bleibt. Es sind deshalb Pyrolysezeiten von beispielsweise 2 Minuten erforderlich, und es würden sich keine merklichen Vorteile bei direktem Einspeisen derartiger Ausgangsmaterialien in tiefere Schichten des Wirbelbetts ergeben.

Bei der dargestellten Ausführungsform ist noch eine weitere seitliche Beschickungsöffnung 63 dargestellt, um zu zeigen, dass natürlich auch an anderen Stellen irgendwelche Materialien in die Wirbelschicht eingespeist werden können, beispielsweise zu pyrolysierendes pumpfähiges Material wie zum Beispiel Altöl.

Die erwähnten Heizrohre 45 und 53 sind vorzugsweise zum Beheizen mit Gas, vorzugsweise Pyrolysegas, ausgelegt. Demgemäss sind in Fig. 1 Anschlüsse 65, 67, 68 für Heizgas bzw. Verbrennungsluft bzw. Abgas angedeutet. Vorzugsweise handelt es sich um sogenannte Strahlungsheizrohre, bei denen das Heizgas und die Verbrennungsluft von dem Abgas hoch vorgeheizt werden und eine hohe Heizleistung pro Flächeneinheit bei hoher Temperatur der Rohroberfläche abgegeben werden kann.

Bei der dargestellten Ausführungsform ergibt sich eine hochtragfähige Wirbelschicht unter anderem dadruch, dass die Blasmündungen 7 in einem schräg nach unten und innen verlaufenden Abschnitt der Innenseite 9 der Umfangswand 3 vorgesehen sind, so dass das nach unten und innen ausgeblasene Wirbelgas im Reaktor-Zentrum eine kräftige Strömung nach oben bildet. Bei der dargestellten Ausführungsform ist der schräge Abschnitt ein im wesentlichen konischer Abschnitt der Innenseite 9; das ist baulich einfach.

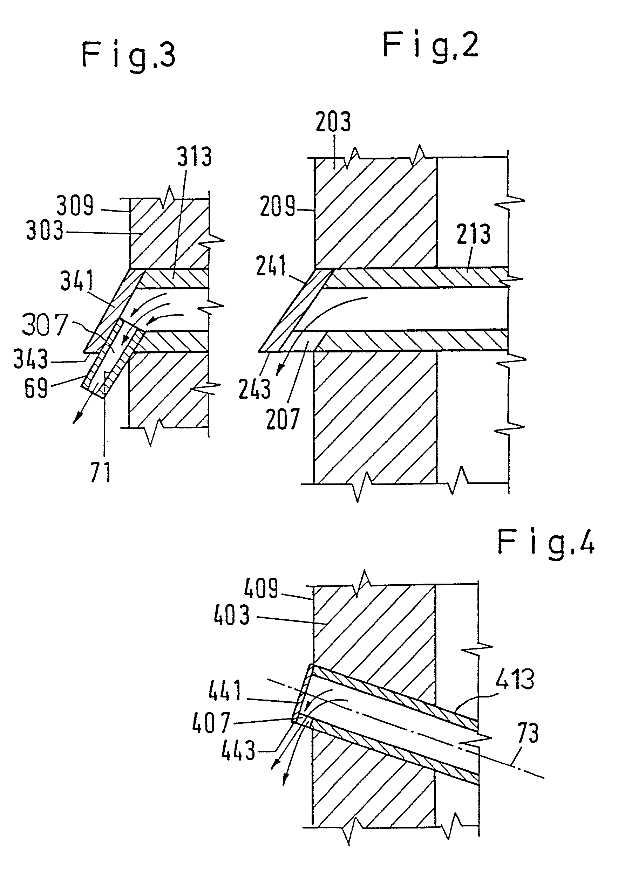

Fig. 2 zeigt die Anordnung einer Blasmündung in ähnlicher Darstellung wie in Fig. 1, jedoch mit grösserem Massstab und in einem vertikalen Abschnitt einer Reaktor-Seitenwand 203. Die Wirbelgas-Zuleitung ist wieder von einem Wirbelgas-Zuleitungsrohr 213 gebildet, das an seinem inneren Ende wenigstens mit einem unteren Umfangsabschnitt 243 über die Innenseite 209 der Umfangswand 203 vorsteht, in diesem Umfangsabschnitt eine Blasmündung 207 aufweist und im übrigen ein verschlossenes Ende hat, das eine Abdeckung 241 für die Blasmündung 207 bildet.

Fig. 3 zeigt eine ähnliche Ausführung mit einem Wirbelgas-Zuleitungsrohr 313, das mit einem unteren Umfangsabschnitt 343 über die Innenseite 309 der Umfangswand 303 vorsteht und dort eine Blasmündung 307 aufweist. Dabei ist jedoch in der Blasmündung 307 ein nach unten gerichtetes Blasrohr 69 vorgesehen. Je nach der Beschaffenheit und Richtung des Blasrohres 69 können gewünschte Strömungsbilder des ausströmenden Wirbelgases erhalten werden. So kann insbesondere das Blasrohr 69 einen die Austrittsgeschwindigkeit des Wirbelgases erhöhenden Querschnittsverlauf 71 haben.

Fig. 4 zeigt eine ähliche Ausgestaltung der Blasmündungen wie in den Fig. 2 und 3. Dabei ist wieder eine vertikale Umfangswand 403 angedeutet. Ein Wirbelgas-Zuleitungsrohr 413 erstreckt sich schräg nach oben und innen durch die Umfangswand 403 und ist an seinem inneren Ende durch eine Abdeckung 441 verschlossen, beispielsweise eine auf das Rohr 413 aufgeschweisste Platte. In einem unteren, über die Innenseite 409 vorstehenden Umfangsabschnitt 443 ist eine schlitzförmige Blasmündung 407 vorgesehen. Durch die schräge Lage des Zuleitungsrohres 413 kann das innere Ende des Rohres in einer zu der Rohrachse 73 radialen Ebene liegen, und die Abdeckung 441 kann einfach eine Kreisscheibe sein. Durch Verwendung unterschiedlicher Einsätze nach Art. des in Fig. 3 gezeigten Blasrohres 69 können Ausströmmenge und Ausströmgeschwindigkeit in weiten Grenzen unabhängig voneinander nach Belieben eingestellt werden. Eine ähnliche Wirkung ist auch durch Dorsseleinrichtungen in den Zuleitungen möglich, beispielsweise auswechselbare Blenden (nicht dargestellt). Derartige gesonderte Drosseleinrichtungen sind leichter zugänglich als die Blasmündungen.

## Patentansprüche

1. Wirbelschichtreaktor zum pyrolytischen Aufarbeiten von Ausgangsmaterial, insbesondere kohlenwasserstoffhaltigen Abfällen mit hohem Gehalt an polymeren organischen Substanzen, wie Altgummi, Altreifen und/oder Kunststoffabfällen, mit einem eine im wesentlichen aufrechtstehende Umfangswand (3) aufweisenden Reaktorbehälter (1), in dessen Innenraum (5) eine Anordnung von Wirbelgas-Blasmündungen (7) zum Einblasen eines Wirbelgases im Bereich der Umfangswand (3) mündet, wobei die Blasmündungen (7) schräg nach unten und innen gerichtete Blasrichtungen (11) bestimmen, dadurch gekennzeichnet, dass die Blasmündungen (7) an unteren Umfangsabschnitten (43) der Enden von Wirbelgas-Zuleitungsrohren (13) angeordnet sind, die wenigstens mit dem unteren Umfangsabschnitt (43) über die Innenseite (9) der Umfangswand (3) in den Innenraum (5) vorstehen, wobei die Enden der Wirbelgas-Zuleitungsrohre (13) im übrigen verschlossen sind, und dass Heizrohre (45) zum indirekten Beheizen der Wirbelschicht (17) im seitlichen Randbereich des Innenraums (5) im wesentlichen vertikal von oben her eintauchend angeordnet sind.

2. Wirbelschichtreaktor nach Anspruch 1, dadurch gekennzeichnet, dass die Blasmündungen (7) im wesentlichen bündig an der Innenseite (9) der Umfangswand (3) liegen.

3. Wirbelschichtreaktor nach Anspruch 1 oder 2, dadurch gekennzeichnet, dass die Blasmündungen (7) durch wenigstens eine schräg nach unten und innen verlaufende Abdeckwand (41) abgedeckt sind.

4. Wirbelschichtreaktor nach einem der Ansprüche 1 bis 3, dadurch gekennzeichnet, dass die Wirbelgas-Zuleitungsrohre (13) zumindest in ihrem dem Innenraum (5) benachbarten Bereich schräg nach oben und innen verlaufen.

5. Wirbelschichtreaktor nach einem der Ansprüche 1 bis 4, dadurch gekennzeichnet, dass in den Blasmündungen nach unten gerichtete Blasrohre (69) vorgesehen sind, die vorzugsweise einen die Austrittsgeschwindigkeit des Wirbelgases erhöhenden Querschnittsverlauf haben.

6. Wirbelschichtreaktor nach einem der Ansprüche 1 bis 4, dadurch gekennzeichnet, dass die Blasmündungen (7; 207; 407) als in Umfangsrichtung sich erstreckende Schlitze ausgebildet sind.

7. Wirbelschichtreaktor nach einem der Ansprüche 1 bis 6, dadurch gekennzeichnet, dass die Blasmündungen (7) in einem nach innen verlaufenden und im wesentlichen konischen unteren Abschnitt der Innenseite (9) angeordnet sind.

8. Wirbelschichtreaktor nach einem der Ansprüche 1 bis 7, dadurch gekennzeichnet, dass die Heizrohre (45) in einem erweiterten Abschnitt des Innenraums (5) angeordnet sind.

9. Wirbelschichtreaktor nach einem der Ansprüche 1 bis 8, dadurch gekennzeichnet, dass die Heizrohre (45-1) in jene Randbereiche des Innenraums (5) eintauchen, die zwischen den Blasmündungen (7) liegen.

10. Wirbelschichtreaktor nach einem der Ansprüche 1 bis 9, dadurch gekennzeichnet, dass die Heizrohre (45-2) in von Blasmündungen (7) besetzten Randbereichen verlaufen und oberhalb der entsprechenden Blasmündungen enden.

11. Wirbelschichtreaktor nach einem der Ansprüche 1 bis 10, dadurch gekennzeichnet, dass die Heizrohre (45) um einen im zentralen Bereich der oberen Stirnwand (47) angeordneten Eintragsstutzen (39) angeordnet sind.

12. Wirbelschichtreaktor nach einem der Ansprüche 1 bis 11, dadurch gekennzeichnet, dass zum Austragen nicht pyrolysierbarer grossstückiger Restbestandteile des Ausgangsmaterials der Reaktorbehälter (1) unten in einem Feststoff-Austragsstutzen (33) endet, in dem weitere Blasmündungen (48) mit im wesentlichen radialer Blasrichtung vorgesehen sind.

13. Wirbelschichtreaktor nach einem der Ansprüche 1 bis 10, dadurch gekennzeichnet, dass im Innenraum (5) weiter innen verlaufende, zusätzliche Heizrohre (53) vorgesehen sind.

14. Wirbelschichtreaktor nach Anspruch 13, gekennzeichnet durch wenigstens eine seitliche Eintrageinrichtung (55) zum seitlichen Eintrag des Ausgangsmaterials in den Innenraum (5), wobei vorzugsweise die Eintrageinrichtung (55) in einen Abschnitt des Innenraums (5) mündet, in welchem sich im Betrieb die Wirbelschicht (17) bildet und die Pyrolyse stattfindet.

15. Wirbelschichtreaktor nach Anspruch 15, dadurch gekennzeichnet, dass im Bereich der seitlichen Eintrageinrichtung (55) liegende Heizrohre oberhalb der Eintrageinrichtung (55) enden.

## Claims

1. Fluidized-bed reactor for pyrolytic treatment of a starting material, in particular hydrocarbon-containing wastes with a high content of polymeric organic substances, such as scrap rubber, old tyres and/or plastic wastes, with a reactor vessel (1) having a substantially vertical circumferential wall (3) and an array of fluidizing-gas blow orifices (7) for blowing in a fluidizing gas, ending in the interior (5) of the reactor vessel, the blow orifices (7) defining obliquely downward- and inward-pointing blowing directions (11), characterized in that the blow orifices (7) are mounted on lower circumferential sections (43) of the ends of fluidizing-gas feed pipes (13), of which at least the lower circumferential sections (43) project into the interior (5) beyond the inside (9) of the circumferential wall (3), the ends of the fluidizing-gas feed pipes (13) being otherwise closed, and that heating pipes (45) for indirect heating of the fluidized bed (17) are provided, which dip substantially vertically from above into the lateral margin region of the interior (5).

2. Fluidized-bed reactor according to claim 1, characterized in that the blow orifices (7) are located substantially flush on the inside (9) of the circumferential wall (3).

3. Fluidized-bed reactor according to claim 1 or 2, characterized in that the blow orifices (7) are covered by at least one covering wall (41) which extends obliquely downwards and inwards.

4. Fluidized-bed reactor according to any of claims 1 to 3, characterized in that the fluidized-gas feed pipes (13) extend obliquely upwards and inwards at least in their region adjoining the interior (5).

5. Fluidized-bed reactor according to any of claims 1 to 4, characterized in that downward-pointing blowing pipes (69) are provided in the blow orifices and preferably have a cross-sectional pattern which raises the outlet velocity of the fluidizing gas.

6. Fluidized-bed reactor according to any of claims 1 to 4, characterized in that the blow orifices (7; 207; 407) are formed as slots extending in the circumferential direction.

7. Fluidized-bed reactor according to any of claims 1 to 6, characterized in that the blow orifices (7) are arranged in an inward-running and substantially conical lower section of the inside (9).

8. Fluidized-bed reactor according to any of claims 1 to 7, characterized in that the heating pipes (45) are arranged in a widened section of the interior (5).

9. Fluidized-bed reactor according to any of claims 1 to 8, characterized in that the heating pipes (45-1) dip into those margin regions of the interior (5) which are located between the blow orifices (7).

10. Fluidized-bed reactor according to any of claims 1 to 9, characterized in that the heating pipes (45-2) extend in margin regions occupied by blow orifices (7) and end above the respective blow orifices.

11. Fluidized-bed reactor according to any of claims 1 to 10, characterized in that the heating pipes (45) are arranged around an inlet branch (39) provided in the central region of the upper end wall (47).

12. Fluidized-bed reactor according to any of claims 1 to 11, characterized in that for discharging non-pyrolyzable large pieces of residue constituents of the starting material, the reactor vessel (1) ends at the bottom in a solids discharge branch (33), in which further blow orifices (48) with a substantially radial blowing direction are provided.

13. Fluidized-bed reactor according to any of claims 1 to 10, characterized in that additional heating pipes (53) located further inwards are provided in the interior (5).

14. Fluidized-bed reactor according to claim 13, characterized by at least one side feed device (55) for feeding the starting material from the side into the interior (5), the feed device (55) preferably ending in the section of the interior (5) where, in operation, the fluidized bed (17) is formed and the pyrolysis takes place.

15. Fluidized-bed reactor according to claim 15, characterized in that heating pipes located in the region of the side feed device (55) end above the feed device (55).

## Revendications

1. Réacteur à combustible fluidisé pour le retraitement pyrolytique d'un matériau initial, en particulier de déchets hydrocarbonés à forte teneur en substances organiques polymères, tels que vieux caoutchoucs, vieux pneus et/ou autres déchets de matières synthétiques, comprenant une cuve (1) munie d'une paroi périphérique (3) sensiblement verticale et dans l'espace interne (5) de laquelle débouche un ensemble d'orifices de soufflage (7) pour l'insufflation d'un gaz tourbillonnaire dans la zone de la paroi périphérique (3), les orifices de soufflage (7) déterminant des directions de soufflage orientées obliquement vers le bas et vers l'intérieur, caractérisé par le fait que les orifices de soufflage (7) sont disposés sur des sections périphériques inférieures (43) des extrémités de tubes d'amenée de gaz tourbillonnaire (13) qui, au moins par leur section périphérique inférieure, dépassent de la face interne (9) de la paroi périphérique (3) et font saillie dans l'espace interne (5), les extrémités des tubes (13) étant par ailleurs fermées, et que des tubes (45) pour le chauffage indirect de la couche fluidisée (17) sont disposés en plongeant sensiblement verticalement à partir du haut dans la zone latérale marginale de l'espace interne (5).

2. Réacteur à combustible fluidisé selon la revendication 1, caractérisé par le fait que les orifices de soufflage (7) sont disposés sensiblement à ras de la face interne (9) de la paroi périphérique (3).

3. Réacteur à combustible fluidisé selon la revendication 1 ou 2, caractérisé par le fait que les orifices de soufflage (7) sont recouverts par au moins une coiffe (41) disposée obliquement vers le bas et vers l'intérieur.

4. Réacteur à combustible fluidisé selon l'une des revendications 1 à 3, caractérisé par le fait que les tubes d'amenée de gaz tourbillonnaire (13), au moins dans leur zone voisine de l'espace interne (5), sont disposés obliquement vers le haut et vers l'intérieur.

5. Réacteur à combustible fluidisé selon l'une des revendications 1 à 4, caractérisé par le fait que, dans les orifices de soufflage, sont prévus des tubes de soufflage (69) dirigés vers le bas et qui ont de préférence une forme de section transversale augmentant la vitesse de sortie du gaz tourbillonnaire.

6. Réacteur à combustible fluidisé selon l'une des revendications 1 à 4, caractérisé par le fait que les orifices de soufflage (7; 207; 407) sont réalisés sous la forme de fentes s'étendant dans le sens périphérique.

7. Réacteur à combustible fluidisé selon l'une des revendications 1 à 6, caractérisé par le fait que les orifices de soufflage (7) sont disposés dans une section inférieure, sensiblement conique et dirigés vers l'intérieur, de la face interne (9).

8. Réacteur à combustible fluidisé selon l'une des revendications 1 à 7, caractérisé par le fait que les tubes de chauffage (45) sont disposés dans une section élargie de l'espace interne (5).

9. Réacteur à combustible fluidisé selon l'une des revendications 1 à 8, caractérisé par le fait que les tubes de chauffage (45-1) plongent dans des zones marginales de l'espace interne (5) qui sont situées entre les orifices de soufflage (7).

10. Réacteur à combustible fluidisé selon l'une des revendications 1 à 9, caractérisé par le fait que les tubes de chauffage (45-2) sont disposés dans des zones marginales occupées par des orifices de soufflage (7) et se terminent au-dessus des orifices de soufflage correspondants.

11. Réacteur à combustible fluidisé selon l'une des revendications 1 à 10, caractérisé par le fait que les tubes de chauffage (45) sont installés autour d'une tubulure d'entrée (39) disposée dans la zone centrale de la paroi frontale supérieure (47).

12. Réacteur à combustible fluidisé selon l'une des revendications 1 à 11, caractérisé par le fait que pour l'extraction d'éléments constitutifs résiduels à gros morceaux et non pyrolysables du matériau initial, la cuve (1) du réacteur se termine par en dessous dans une tubulure d'évacuation (33) des matières solides dans laquelle sont prévus d'autres orifices de soufflage (48) à sens de soufflage sensiblement radial.

13. Réacteur à combustible fluidisé selon l'une des revendications 1 à 10, caractérisé par le fait que des tubes de chauffage supplémentaires (53) allant plus loin vers l'intérieur sont prévus dans l'espace interne (5).

14. Réacteur à combustible fluidisé selon la revendication 13, caractérisé par au moins un dispositif d'alimentation latérale (55) pour l'introduction latérale du matériau initial dans l'espace interne (5), le dispositif d'alimentation débouchant de préférence dans une section de l'espace interne (5) dans laquelle la couche tourbillonnaire (17) se forme pendant le fonctionnement et où se produit la pyrolyse.

15. Réacteur à combustible fluidisé selon la revendication 15, caractérisé par le fait que des tubes de chauffage disposés dans la zone du dispositif d'alimentation latérale (55) se terminent au-dessus du dispositif d'alimentation (55).

Fig.1

Fig.3

Fig.2

Fig.4